Europäisches Patentamt

European Patent Office

Office européen des brevets

(19)

(11) Numéro de publication: **0 148 679**
A1

(12)

# DEMANDE DE BREVET EUROPEEN

(21) Numéro de dépôt: 84402592.4

(22) Date de dépôt: 14.12.84

(51) Int. Cl.⁴: **B 23 Q 3/12**, B 23 B 31/26

(30) Priorité: 16.12.83 FR 8320225

(71) Demandeur: **Société Anonyme BERTHIEZ SAINT ETIENNE, 5, rue Barrouin - B.P. 119, F-42003 Saint Etienne (FR)**

(43) Date de publication de la demande: 17.07.85
Bulletin 85/29

(72) Inventeur: **Poincenot, René P., "Le Chapitre", F-77132 Larchant (FR)**

(84) Etats contractants désignés: **AT BE CH DE GB IT LI SE**

(74) Mandataire: **Moulines, Pierre et al, Cabinet BEAU de LOMENIE 55, rue d'Amsterdam, F-75008 Paris (FR)**

(54) Dispositif de montage d'un porte outil de tournage ou de fraisage sur un coulant de machine-outil.

(57) Dispositif de montage d'un porte-outil de tournage ou de fraisage sur un coulant de machine-outil. A l'intérieur du corps 1 du coulant est monté coulissant un fourreau 3 recevant intérieurement une broche rotative 4, ledit fourreau 3 pouvant occuper une position dans laquelle il est déplacé vers l'intérieur du corps 1 et pour laquelle le porte-outil de tournage 23 est immobilisé sur l'embase du coulant par des organes de centrage ou stries 21, 22 sous l'action d'une force de traction axiale exercée par l'une des extrémités de la broche 4 sur le porte-outil de tournage 23, et une position dans laquelle ledit fourreau 3 est déplacé vers l'extérieur du corps 1 du coulant contre une portée de centrage 20 dudit corps 1 et pour laquelle le porte-outil de fraisage est monté à l'extrémité de la broche 4 qui est susceptible de tourner sous l'action d'un moyen d'entraînement en rotation. L'invention est utilisée dans les machines-outils.

EP 0 148 679 A1

## Dispositif de montage d'un porte-outil de tournage ou de fraisage sur un coulant de machine-outil.

La présente invention a pour objet un dispositif de montage d'un porte-outil de tournage ou de fraisage sur un coulant de machine-outil.

Lors de l'utilisation d'une machine outil il peut être avantageux de pouvoir monter sélectivement sur un même coulant un porte-outil de tournage spécialement conçu et adapté pour cette fonction et un porte-outil de fraisage.

Cette disposition permet ainsi de réaliser deux opérations différentes sur un même coulant de machine outil.

Conformément à la présente invention à l'intérieur du corps du coulant est monté coulissant un fourreau recevant intérieurement une broche rotative, ledit fourreau pouvant occuper une position dans laquelle il est déplacé vers l'intérieur du corps et pour laquelle le porte-outil de tournage est immobilisé sur l'embase du coulant par des organes de crantage ou stries sous l'action d'une force de traction axiale exercée par l'une des extrémités de la broche sur le porte-outil de tournage, et une position dans laquelle ledit fourreau est déplacé vers l'extérieur du corps du coulant contre une portée de centrage dudit corps et pour laquelle le porte-outil de fraisage est monté à l'extrémité de la broche qui est susceptible de tourner sous l'action d'un moyen d'entraînement en rotation.

Ce dispositif permet d'effectuer la force de traction sur le porte-outil de tournage en agissant directement sur la broche dont l'extrémité extérieure est en appui contre le porte-outil, les paliers et le fourreau étant déplacés sans subir aucune contrainte. Par contre, en position de fraisage l'organe de commande agit sur le fourreau pour assurer son centrage et celui de la broche à l'intérieur du corps du coulant.

D'autres caractéristiques et avantages de l'invention seront mieux compris à la lecture de la description qui va suivre de plusieurs modes de réalisation et en se référant aux dessins annexés, sur lesquels ;

- la figure 1 est une demi-vue en coupe longitudinale d'un coulant de machine-outil comportant le dispositif suivant l'invention en position de serrage d'un porte-outil de tournage.

- la figure 2 est une même demi-vue en coupe du dispositif en position de serrage d'un porte-outil de fraisage.

- la figure 3 est une vue en coupe suivant la ligne III III de la figure 1.

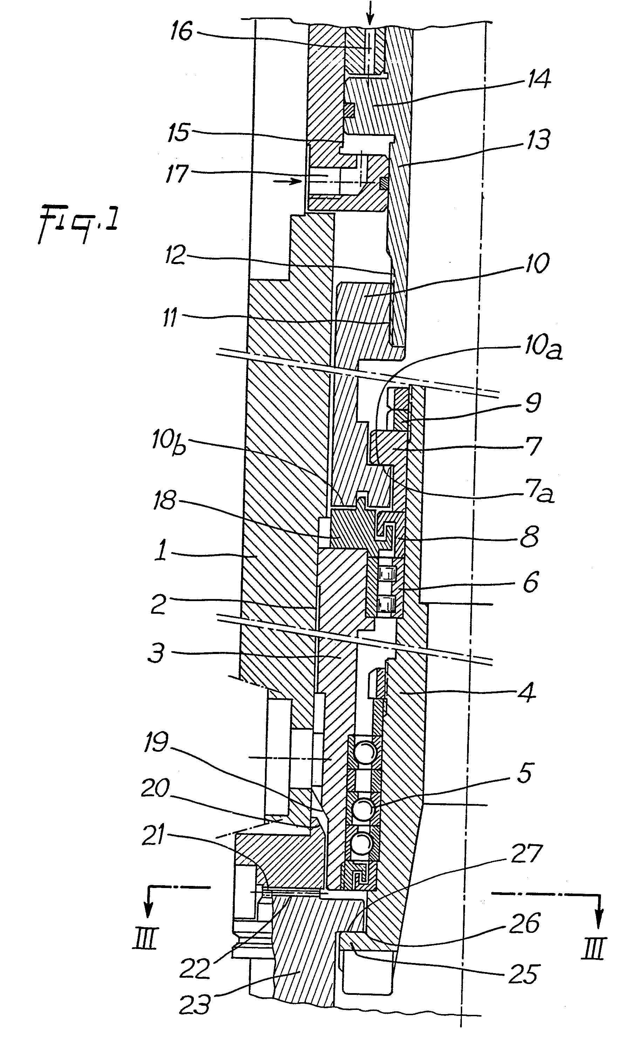

A la figure 1 on a représenté un corps 1 d'un coulant de machine-outil, ledit coulant étant disposé verticlament mais pouvant occuper toute autre position, ledit corps présentant intérieurement un alésage 2 dans lequel est monté coulissant axialement un fourreau 3 dans lequel est montée rotative une broche 4 au moyen de deux jeux de paliers 5 et 6.

A la partie supérieure de la broche 4 est fixée une bague 7 maintenue serrrée entre une bague 8 solidaire de la broche et des écrous 9 vissés sur une partie filetée de la broche, ladite bague 7 présentant un épaulement 7a contre lequel est susceptible de venir en appui un épaulement 10a d'un organe de transmission tubulaire 10 monté coulissant dans l'alésage du corps 1 du coulant.

L'organe de transmission 10 présente un trou taraudé 11 dans lequel est vissé une partie filetée 12 d'une tige 13 d'un vérin hydraulique dont le piston 14, se déplace axialement dans un cylindre 15 ménagé dans le corps 1 du coulant.

Ledit piston 14 étant soumis sur ses deux faces à l'action d'un fluide hydraulique qui est admis par les conduits 16 et 17 afin de déplacer alternativement le piston 14 vers le haut ou vers le bas. Le vérin hydrau-

lique (14, 15) pourraît être remplacé par tout autre moyen de commande pneumatique, mécanique ou électrique.

Sur la partie supérieure du fourreau 3 est fixée une bague 18 contre laquelle est susceptible de venir en appui une face 10b, de l'organe de transmission 10 relié au piston 14 du vérin.

A la partie inférieure du fourreau 3 il est prévu une portée cônique 19 qui est susceptible de venir en appui pour le centrage dudit fourreau contre une portée cônique 20 prévue dans le corps 1 du coulant.

Sur l'embase du corps 1 du coulant sont prévues des stries ou organes de crantage 2I dans lesquelles sont engagées des stries 22 ou organes de crantage correspondants prévus sur la face supérieure du porte-outil de tour 23.

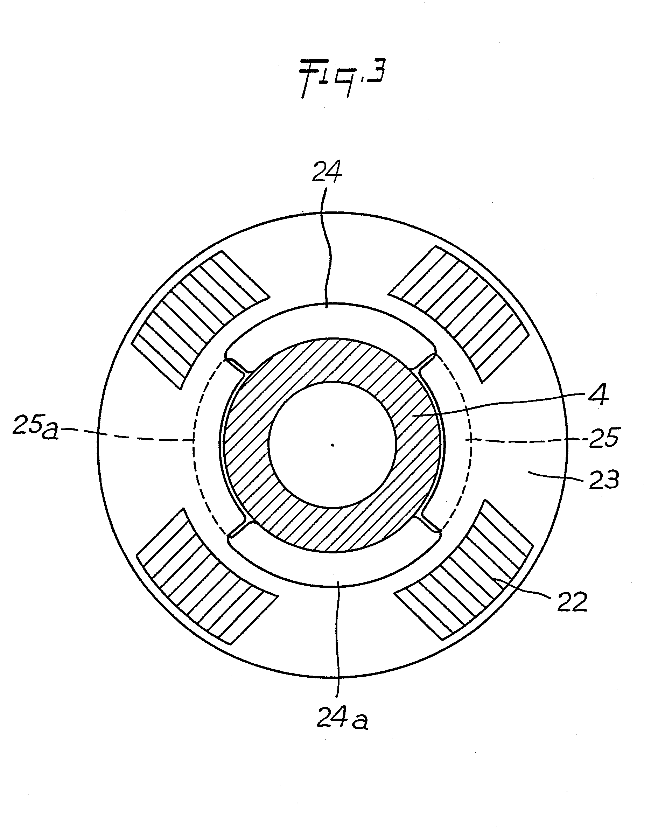

Afin de permettre l'accouplement et le désaccouplement du porte-outil 23 avec la broche 4, il est pré vu (Figure 1 et 3) dans le porte-outil deux échancrures 24, 24a disposées à 180° et dans lesquelles sont susceptibles d'être engagées deux barrettes 25, 25 a, également à 180° et solidaires de la base de la broche 4 et qui après une rotation de 90° sont susceptibles de venir en appui par leur face 26 contre la face 27 de la partie du porte-outil 23 située entre les échancrures 24, 24 a.

Lorsque le porte-outil 23 est immobilisé par ses stries 22 dans les stries correspondantes 21 de l'embase du corps 1 du coulant, la broche 4 est en appui par ses barrettes 25 contre la face 27 du porte-outil 23 sous l'action de la traction axiale exercée par le piston 14, du vérin soumis à l'action du fluide pénétrant par le conduit 17 comme représenté à la figure 1. La liaison entre la broche 4 et la tige 13 du vérin est réalisée par l'organe de transmission 10 dont l'épaulement 10a est en appui contre l'épaulement 7a de la bague 7 solidaire de la broche 4.

Le démontage du porte-outil 23 est obtenu par une translation du fourreau 3 afin de permettre le dégagement des stries 22 du porte-outil des stries 2I de l'embase du corps 1, ledit fourreau étant ensuite entraîné en rotation suivant un angle de 90° pour permettre le dégagement des barrettes 25, 25a, de la broche par les échancrures 24, 24 a, du porte-outil.

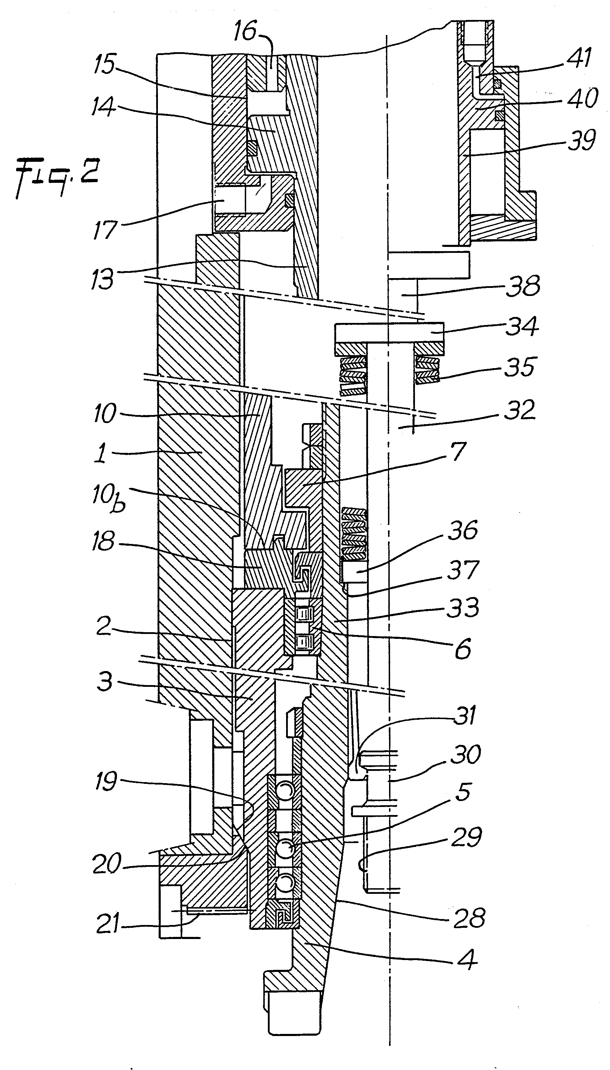

A la figure 2 on a représenté le même coulant muni du dispositif suivant l'invention lorsque le porte-outil de tournage 23 est démonté et qu'il est susceptible de recevoir le porte-outil de fraisage non représenté au dessin.

Dans ce cas, le piston 14 est soumis à l'action du fluide en provenance du conduit 16 qui est déplacé vers le bas et exerce par l'intermédiaire de la face 10b de l'organe de transmission 10 une force de pression sur la bague 18 et sur le fourreau 3 qui est déplacé vers le bas de telle sorte que sa portée conique 19 vienne en appui avec la portée conique 20 du corps 1.

Le fourreau 3 de la broche est alors immobilisé en translation et parfaitement centré dans l'axe de la broche.

La broche 4 est alors susceptible de tourner sous l'action d'un moyen d'entraînement en rotation d'un type connu non représenté au dessin.

Dans l'évidement conique 28 de la broche 4 est monté un porte-outil de fraisage non représenté au dessin et qui est fixé sur la partie filetée 29 d'un organe de traction 30 qui est maintenu serré dans les mors d'une pince 3I solidaire d'une tige 32 disposée dans un alésage 33 de la broche 4.

A son extrémité supérieure la tige 32 présente une tête 34 contre laquelle est en appui l'une des extrémités .d' un empilage 35 de rondelles élastiques qui est en appui à l'autre extrémité contre une bague 36 en appui contre un épaulement 37 de la broche 4.

Sur la tête 34 de la tige 32 est susceptible de venir en appui une bague intermédiaire 38 qui est soumise à l'action de la tige 39 d'un piston 40 de vérin soumis sur l'une de ses faces à l'action d'un fluide hydraulique qui est admis par un conduit 41.

Ce dispositif assure le serrage du porte-outil de fraisage par l'intermédiaire de l'organe de traction 30 solidaire de cette dernière et qui est maintenu serré dans la pince 3I soumise à l'action de la traction exercée sur la tige 32, par l'empilage de rondelles élastiques 35.

Pour le desserrage du porte-outil on agit sur le piston 40 du vérin en admettant le fluide hydraulique par le conduit 41, de telle sorte que la tige 39 du piston repousse vers le bas par l'intermédiaire de la bague 38, la tige 32 en comprimant les rondelles élastiques 35. La pince 31 étant ainsi repoussée vers le bas permet de libérer l'organe de traction 30 et le porte-outil de fraisage non représenté au dessin.

Bien entendu diverses modifications peuvent être apportées par l'homme de l'art aux modes de réalisations qui viennent d'être décrits sans sortir du cadre de l'invention.

6

R E V E N D I C A T I O N S

1.      Dispositif de montage d'un porte-outil de tournage ou de fraisage sur un coulant de machine-outil, caractérisé en ce qu'à l'intérieur du corps 1 du coulant est monté coulissant un fourreau 3 recevant intérieurement une broche rotative 4, ledit fourreau 3 pouvant occuper une position dans laquelle il est déplacé vers l'intérieur du corps 1 et pour laquelle le porte-outil de tournage 23 est immobilisé sur l'embase du coulant par des organes de crantage ou stries 21, 22 sous l'action d'une force de traction axiale exercée par l'une des extrémités de la broche 4 sur le porte-outil de tournage 23, etune position dans laquelle ledit fourreau 3 est déplacé vers l'extérieur du corps 1 du coulant contre une portée de centrage 20dudit corps 1 et pour laquelle le porte-outil de fraisage est monté à l'extrémité de la broche 4 qui est susceptible de tourner sous l'action d'un moyen d'entraînement en rotation.

2.      Dispositif suivant la revendication 2, caractérisé en ce qu'un organe de commande 14 à déplacement axial est solidaire d'un organe de transmission 10 susceptible d'être accouplé sélectivement avec l'extrémité intérieure de la broche lors de son déplacement vers l'intérieur du coulant et avec l'extrémité intérieure du fourreau 3 lors de son déplacement par poussée vers l'extérieur du coulant.

3.      Dispositif suivant les revendications 1 et 2 caractérisé en ce que la broche 4 comporte à l'une de ses extrémités située au delà des paliers 5, 6, sur lesquels elle est montée rotative dans le fourreau 3, une bague 7 susceptible de venir en appui contre une face de l'organe de transmission 10.

4.      Dispositif suivant les revendications 1 et 2, caractérisé en ce que le fourreau 3 présente à l'une de ses extrémités une bague 18 contre laquelle est susceptible de venir en appui par poussée l'organe de transmission 10.

5. Dispositif suivant la revendication 1, caractérisé en ce que le fourreau 3 présente une portée de centrage cônique 19 susceptible de venir en appui contre une portée cônique 20, correspondante prévue dans le corps 1 du coulant.

6. Dispositif suivant la revendication 2, caractérisé en ce que l'organe de commande à déplacement axial 14, 15, est constitué d'un vérin hydraulique pneumatique mécanique ou électrique.

7. Dispositif suivant la revendication 1, caractérisé en ce que le porte-outil de tour 23 comporte deux échancrures 24, 24a, par lesquelles sont susceptibles d'être engagées deux barrettes 25, 25a, solidaires de la broche 4 et qui après une rotation de 90° de celle-ci sont susceptibles de venir en appui contre une face 27 du porte outil 23.

Fig.1

0148679

1/3

Fig. 2

Fig.3

# 0148679

Office européen
des brevets

**RAPPORT DE RECHERCHE EUROPEENNE**

Numéro de la demande

EP 84 40 2592

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 235 820 (INNOCENTI) | 1 | B 23 Q 3/12 |
| | | | B 23 B 31/26 |
| A | DE-A-3 312 571 (THOSHIBA) | 1 | |
| A | DE-B-1 271 500 (FRORIEP) | 1 | |
| A | FR-A-1 552 061 (HERBERT) | 1 | |
| A | US-A-3 868 886 (EX-CELL-O) | | |

---

**DOMAINES TECHNIQUES RECHERCHES (Int. Cl.4)**

B 23 Q 3/00
B 23 Q 1/00
B 23 B 31/00

Le présent rapport de recherche a été établi pour toutes les revendications

| Lieu de la recherche | Date d'achèvement de la recherche | Examinateur |
|---|---|---|
| LA HAYE | 19-03-1985 | BOGAERT F.L. |